## Europäisches Patentamt
## European Patent Office
## Office européen des brevets

(11) Numéro de publication: **0 165 083**
**B1**

(12) **FASCICULE DE BREVET EUROPEEN**

(45) Date de publication du fascicule du brevet:
**28.12.88**

(51) Int. Cl.⁴: **B 23 P 6/00**

(21) Numéro de dépôt: **85400660.8**

(22) Date de dépôt: **03.04.85**

(54) **Procédé pour rénover des joints-labyrinthes usés, en particulier sur des pièces de turbomachines, et outils pour mettre en oeuvre ce procédé.**

(30) Priorité: **19.04.84 FR 8405274**

(43) Date de publication de la demande:
**18.12.85 Bulletin 85/51**

(45) Mention de la délivrance du brevet:
**28.12.88 Bulletin 88/52**

(84) Etats contractants désignés:
**DE FR GB**

(56) Documents cités:
**DE-C- 925 041**
**FR-A- 904 626**
**FR-A- 2 449 508**
**US-A- 3 204 325**
**US-A- 3 439 521**
**US-A- 3 846 899**
**US-A- 4 028 788**

(73) Titulaire: **SOCIETE NATIONALE D'ETUDE ET DE CONSTRUCTION DE MOTEURS D'AVIATION, "S.N.E.C.M.A.", 2 Boulevard Victor, F-75015 Paris (FR)**

(72) Inventeur: **Riethmuller, Jean René Lucien, 18, rue des Cigognes, F-91380 Chilly Mazarin (FR)**

(74) Mandataire: **Moinat, François, S.N.E.C.M.A. Service des Brevets Boîte Postale 81, F-91003 Evry Cédex (FR)**

## Description

La présente invention concerne un procédé pour rénover des joints-labyrinthes usés, en particulier sur des pièces de turbomachines, ainsi qu'un outil pour mettre en œuvre ce procédé sur un tout parallèle.

Les turbomachines comportent de nombreux joints-labyrinthes, ainsi constitués: des lèvres annulaires en alliage résistant, dites «léchettes», sont portées par une pièce, qui a généralement une forme de révolution, et qui est montée dans la turbomachine de façon que les bords externes des léchettes annulaires coopèrent avec une surface coaxiale d'une autre pièce, en rotation relative par rapport à la première pièce. Les conditions de travail des joints-labyrinthes dans les turbomachines sont telles que les bords externes des léchettes s'usent plus ou moins rapidement, ce qui se traduit par une réduction de la hauteur radiale desdites léchettes, et par suite, par une réduction sensible de l'étanchéité du joint-labyrinthe.

Pour éviter d'avoir à mettre au rebut des pièces de turbomachines dont les léchettes sont usées, il est souhaitable de rénover lesdites pièces avant que leur usure n'ait dépassé une valeur déterminée, de par exemple 0,3 à 0,8 mm.

Le brevet US-A-4.028.788 décrit un procédé pour rénover des léchettes, qui consiste essentiellement à y faire un apport de métal par soudage électrique, puis à réusiner les léchettes à leurs dimensions nominales. Ce procédé peut donc conduire à des pertes relativement importantes du métal ou de l'alliage constituant les léchettes.

Le brevet US-A-3.846.899 décrit des joints-labyrinthes dont les léchettes annulaires peuvent, lorsqu'elles sont usées, être remplacées par de nouvelles léchettes, qui sont engagées chacune dans une gorge usinée dans la pièce correspondante. Il s'agit donc d'un procédé encore plus coûteux en matériau constituant les léchettes, et qui nécessite des opérations d'usinage coûteuses ainsi que des dispositions spéciales pour immobiliser les nouvelles léchettes, par exemple au moyen de dépôts métalliques; par ailleurs, cette immobilisation des nouvelles léchettes dans les gorges correspondantes peut comporter des défauts, qui se révéleront lorsque la pièce portant les léchettes tournera à des régimes élevés.

Le brevet US-A-4.285.108 décrit également la rénovation de léchettes par soudage d'un nouvel élément sur la pièce usée, qui a été préalablement égalisée par meulage.

Le procédé selon la présente invention est du type indiqué initialement, et il permet de rénover les joints-labyrinthes usés, pratiquement sans consommation ni perte du matériau constituant les léchettes, sans risque de les désolidariser de la pièce qui les porte, et sans opération d'usinage, compliquée et coûteuse.

Le procédé selon la présente invention utilise le fait que la hauteur radiale, réduite par l'usure, des léchettes annulaires du joint-labyrinthe, peut être ramenée, principalement par des opérations de fluotournage, à la valeur nécessaire pour rétablir l'étanchéité du joint-labyrinthe.

Le fluotournage est certes une opération d'usinage bien connue, mais jusqu'à présent, il n'a jamais été utilisé pour remettre en forme des pièces telles que des léchettes de joints-labyrinthes; jusqu'à présent, le fluotournage avait été utilisé essentiellement pour conformer des pièces cylindriques côniques à partir d'une ébauche à parois épaisses, sans devoir recourir à des traitements thermiques intermédiaires.

Dans un mode d'exécution préféré du procédé selon la présente invention, la pièce, dont les léchettes annulaires usées sont solidaires et sont concentriques à l'axe de révolution (A) de la pièce et espacées régulièrement dans la direction dudit axe (A), est montée en mandrin sur un tour, puis entraînée en rotation à une vitesse constante, appropriée; pendant la rotation de la pièce, ses différentes léchettes annulaires sont successivement soumises à une opération de fluotournage; de préférence, cette opération de fluotournage consiste, pour chaque léchette, à déplacer radialement, avec une vitesse d'avance et sur une distance radiale appropriées, un outil comprenant deux galets, qui sont disposés avec un écartement maintenu constant et inférieur à la largeur minimale de la léchette usée, de façon à pincer ses deux flancs et à réduire leur écartement, de telle sorte que la matière de la léchette, qui est refoulée dans la direction axiale, vient agrandir sa hauteur radiale, jusqu'à une valeur au moins égale à sa valeur nominale.

Bien entendu, les différents paramètres pour la mis en œuvre de ce mode d'exécution préféré de l'invention, notamment la vitesse de rotation de la pièce portant les léchettes, la vitesse et la distance d'avance radiale de l'outil, les épaisseurs et l'écartement de ses deux galets, doivent être adaptés aux dimensions des léchettes à rénover ainsi qu'au matériau qui les constitue et à sa dureté. En outre, lors du fluotournage de chaque léchette annulaire, l'outil est maintenu, de préférence, dans sa position d'avance radiale maximale, pendant une durée appropriée, avant son déplacement radial de retrait; pendant cette durée, les galets de l'outil sont respectivement au contact des deux flancs de la léchette de façon à stabiliser sa forme.

Comme, cependant, les léchettes annulaires qui ont subi chacune l'opération de fluotournage précédemment indiquée, peuvent présenter encore des défauts, selon une autre caractéristique de l'invention elles peuvent être ensuite rectifiées à leur diamètre nominal, de façon à faire disparaître les défauts éventuels de leurs bords externes; de même, les défauts éventuels de leurs flancs peuvent être éliminés, par exemple par pierrage.

L'outil pour mettre en œuvre le procédé selon la présente invention, sur un tour parallèle, est caractérisé en ce qu'il comporte deux galets, enfilés sur un axe avec interposition d'une cale d'écartement, d'épaisseur adaptée à la largeur de la léchette à fluotourner, des moyens pour immobiliser axialement les deux galets et leur cale d'écartement, et un bras, par exemple coudé, servant à fixer ledit axe à un organe du tour, déplaçable radialement et axialement, par exemple un chariot du tour.

A titre d'exemple, on a décrit ci-dessous et illustré schématiquement au dessin annexé, un mode d'exécution de l'invention.

La figure 1 est une vue schématique, en coupe partielle, illustrant le début du fluotournage d'une léchette annulaire d'une pièce de turbomachine, par exemple d'un rotor, à l'aide d'un outil selon la présente invention, monté sur un tour parallèle, qui n'a pas été représenté.

Les figures 2 et 3 sont des vues schématiques à plus grande échelle, illustrant respectivement la phase initiale et la phase finale du fluotournage de l'une des léchettes annulaires de la pièce illustrée sur la figure 1.

La figure 4 est une vue, en coupe par un demi-plan radial, de la léchette annulaire, qui a été rénovée par le procédé illustré sur les figures 2 et 3.

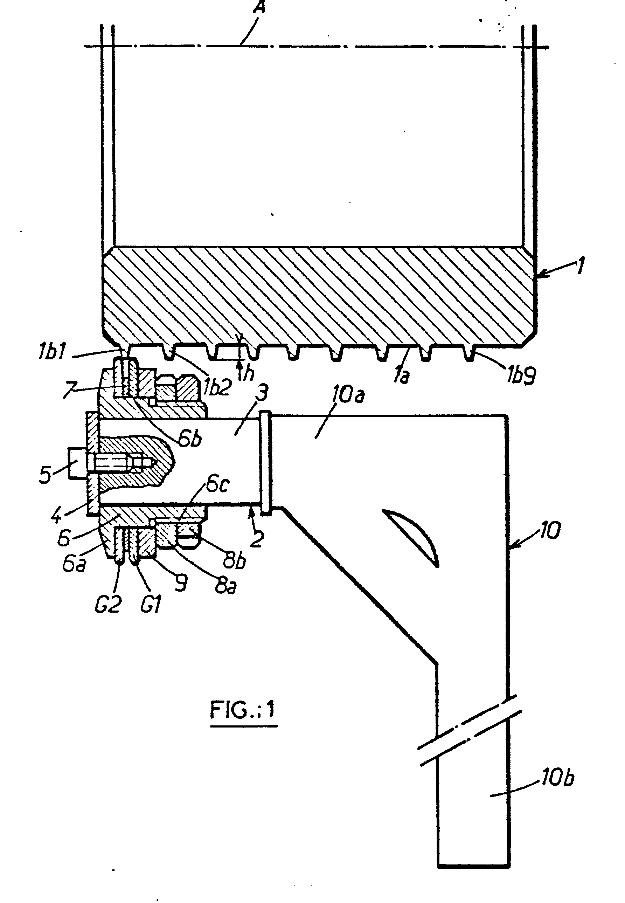

Sur la figure 1, on a désigné par 1 une pièce de turbomachine, qui est destinée à faire partie d'un joint-labyrinthe, dont on n'a pas représenté la pièce complémentaire; dans l'exemple illustré, la pièce 1 comporte une surface externe cylindrique 1a, de laquelle se détachent des léchettes annulaires, 1b1, 1b2 ... 1b9, qui sont concentriques à l'axe de révolution, A, de la pièce 1, et qui sont espacées régulièrement dans la direction dudit axe A. Les léchettes 1b1 à 1b9 sont solidaires de la pièce 1, ayant été usinées, par exemple par tournage, en même temps que sa surface latérale 1a; on connaît de nombreux types d'alliages dont les propriétés mécaniques et physiques sont adaptées à la réalisation de léchettes de joints-labyrinthes, et le procédé selon la présente invention, qui va être décrit, convient pour la rénovation des léchettes constituées avec la plupart de ces matériaux connus.

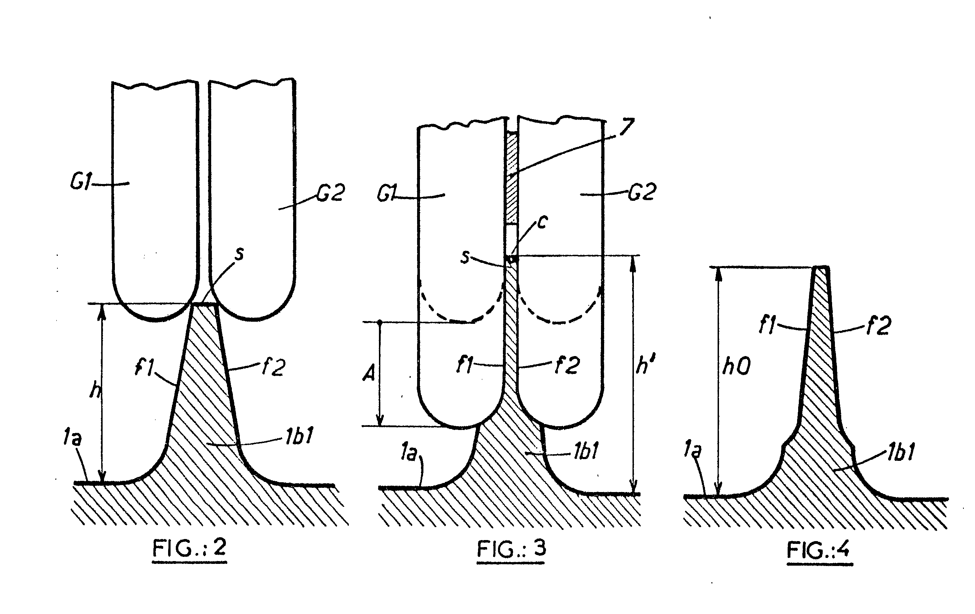

On suppose que les léchettes 1b1...1b9 de la pièce 1 ont été usées, notamment par frottement contre la surface complémentaire, – non représentée – du joint-labyrinthe correspondant; ceci veut dire non seulement que les flancs f1 et f2 de chaque léchette, ainsi éventuellement que son sommet s (voir la figure 2), présentent des rugosités et des irrégularités importantes, mais aussi que sa hauteur radiale h est inférieure à sa valeur nominale, $h_o$, si bien que l'étanchéité globale du joint-labyrinthe correspondant est devenue insuffisante. Le procédé selon la présente invention est applicable de préférence aux léchettes usées pour lesquelles le degré d'usure $(h_o-h)$ est de l'ordre de 0,3 à 0,8 mm pour les diamètres usuels des joints-labyrinthes des turbomachines.

La figure 1 montre également un outil de fluotournage, 2, qui est spécialement adapté à la rénovation des léchettes par le procédé selon la présente invention. Dans l'exemple de réalisation illustré sur la figure 1, cet outil comporte un axe 3, portant à son extrémité gauche (sur la figure 1) une rondelle de butée 4, qui est fixée dans ladite extrémité de l'axe 3 par une vis 5, de façon à immobiliser sur ledit axe 3 un manchon 6, qui est engagé à frottement sur l'axe 3, et qui comporte, du côté de la butée 4, un épaulement annulaire, externe, 6a, faisant suite à une portée cylindrique 6b. Sur cette portée cylindrique sont engagés deux galets ou mollettes, G1 et G2, séparés par une cale d'écartement 7. La partie droite du manchon 6 est pourvue d'un filetage externe 6c, dont le diamètre est un peu inférieur à celui de la portée 6b, et sur laquelle peuvent être vissés un écrou 8a et un contre-écrou 8b, permettant de serrer, par l'intermédiaire d'une bague annulaire 9, les deux galets G1 et G2, et leur cale d'écartement 7, contre l'épaulement 6a. Dans l'exemple de réalisation illustré, l'extrémité droite de l'axe 3 est portée par une extrémité, 10a, d'un bras coudé 10, dont l'autre extrémité, 10b, est sensiblement perpendiculaire à 10a.

Pour la mise en œuvre du procédé de rénovation des léchettes selon la présente invention, la pièce 1 qui porte les léchettes usées, 1b1 à 1b9, est montée en mandrin sur un tour parallèle, non représenté, de façon à pouvoir entraîner ladite pièce 1 en rotation autour de son axe A; d'autre part, l'extrémité, 10b, du bras coudé 10, qui porte l'outil de fluotournage selon la présente invention, est fixée à un organe – également non représenté – du tour parallèle, – qui peut être déplacé à volonté dans la direction axiale, c'est-à-dire dans la direction de l'axe A, et dans une direction radiale, perpendiculaire à A, notamment la direction de l'extrémité 10b du bras coudé 10; par exemple, cette extrémité 10b du bras coudé 10, portant l'outil de fluotournage, peut être fixée au chariot du tour parallèle.

L'outil de fluotournage étant écarté radialement des bords extrêmes des léchettes 1b1 à 1b9, la pièce à rénover 1 est mise en rotation autour de son axe A avec une vitesse appropriée; en agissant sur l'organe du tour, déplaçable axialement et radialement, qui a été prédédemment mentionné, on amène ensuite l'invervalle qui est maintenu, entre les deux galets G1 et G2, par la cale d'écartement 7, en regard du sommet de la première léchette, 1b1, dans la position illustrée sur la figure 1, et, à plus grande échelle, sur la figure 2. Il faut évidemment choisir un tour qui est équipé d'un organe susceptible d'être déplacé, axialement et radialement, avec beaucoup de précision, soit à l'aide de verniers, dans le cas d'une commande manuelle des déplacements axiaux et radiaux, soit de façon automatique, par exemple sous l'action de commandes numériques.

Lorsque les flancs internes des parties arrondies des deux galets G1 et G2 sont parvenus au contact des arêtes latérales du sommet s de la léchette 1b1, dans la position illustrée sur la figure 2, on commande, manuellement ou automatiquement, une avance radiale lente, d'amplitude A (figure 3) de l'outil portant les galets G1 et G2. Cette avance A est généralement de l'ordre de 1 à 2 mm, suivant les conditions du fluotournage, et notamment le matériau constituant la léchette 1b1. Comme le montre clairement la figure 3, la matière de la léchette usée 1b1, sous l'action de l'avance radiale des galets G1 et G2, maintenus avec un écartement constant, flue dans la direction radiale, opposée à celle de l'avance radiale des galets G1 et G2. En d'autres termes, les deux flancs f1 et f2, de la léchette 1b1, sont pincés entre les faces latérales internes des galets G1 et G2, ce qui a pour effet de réduire fortement l'écartement des flancs f1 et f2, c'est-à-dire l'épaisseur de la léchette dans la direction axiale, et, par suite, d'agrandir sa hauteur radiale jusqu'à une valeur $h'$, notablement supérieure à la hauteur radiale $h$ de la léchette usée. Bien entendu, l'opération doit être conduite de telle sorte que la hauteur radiale $h'$ obtenue par le fluotournage, soit au moins égale, et de préférence un peu supérieure, à sa valeur nominale $h_0$.

Les galets G1 et G2 sont ensuite maintenus pendant une durée déterminée, par exemple de l'ordre de 30 secondes, dans leur position d'avance radiale maximale, visible sur la figure 3, de façon à stabiliser la forme de la léchette rénovée, puis l'outil portant les galets G1 et G2 est ensuite animé d'un mouvement radial de retrait, de façon à ce que la léchette rénovée cesse d'être en contact avec lesdits galets. Lorsque les flancs internes de ces galets cessent d'exercer une forte pression sur les flancs f1 et f2 de la léchette, la forme desdits flancs se modifie de nouveau spontanément, pour reprendre notamment la forme visible sur la figure 4, qui est voisine de la forme d'une léchette neuve.

En déplaçant ensuite l'outil 2 et le bras 10 qui le porte, vers la droite dans la direction de l'axe A, on amène ainsi la paire de galets G1–G2 successivement en regard des léchettes annulaires suivantes, 1b2...1b9, et l'on rénove chacune d'elles en répétant, à son niveau, l'opération de fluotournage, précédemment décrite. De préférence, les opérations de fluotournage ont lieu avec une lubrification abondante, notamment avec de l'huile soluble.

Lorsqu'une léchette usée a été ainsi soumise à un traitement de rénovation par fluotournage, selon la présente invention, elle peut cependant représenter des défauts superficiels, par exemple des petits cratères tels que c (figure 3) à son sommet s, ou encore des plis formés sur ses flancs f1 et f2 par la compression de la matière de la léchette, produite par les galets G1 et G2. Cependant, il est possible, selon la présente invention, de faire disparaître ces défauts rédiduels des léchettes fluotournées, de la façon suivante: dans la mesure où leur hauteur radiale, $h'$, est un peu supérieure à la hauteur nominale $h_0$ (figure 4), il est possible de rectifier le sommet s de chaque léchette fluotournée en réduisant sa hauteur radiale $h'$ à la valeur nominale $h_0$, de façon à faire disparaître les cratères tels que c; les plis que présentent éventuellement les flancs, f1 et f2, peuvent être, d'autre part, supprimés, par exemple par pierrage.

La déposante a effectué de nombreuses expériences de mise en œuvre de son procédé, tant sur des pièces-éprouvettes, comportant des léchettes de hauteur radiale réduite, que sur des pièces dont les léchettes avaient été usées au cours de leur service dans des turbomachines. Ces expériences ont montré à la déposante que son procédé de rénovation des léchettes usées de joints-labyrinthes donne d'excellents résultats, avec les avantages précédemment mentionnés, à condition que soient adaptés les uns aux autres les différents paramètres suivants: la hauteur radiale résiduelle $h$ des léchettes à rénover, qui ne doit pas être trop inférieure à $h_0$; la largeur du sommet, s, des léchettes; la vitesse de rotation de la pièce portant les léchettes, pendant les opérations de fluotournage; l'espacement des galets G1 et G2, c'est-à-dire l'épaisseur de la cale d'écartement 7, ainsi que l'épaisseur, dans la direction axiale, de chacun des galets G1 et G2, ces trois derniers paramètres pouvant être modifiés en échangeant les pièces G1, G2 et 7 pour d'autres, d'épaisseurs différentes; la vitesse et l'amplitude A de l'avance radiale des galets G1 et G2; la durée pendant laquelle les galets G1 et G2 sont maintenus dans leur position d'avance radiale maximale, avant le retrait de l'outil; enfin, les caractéristiques mécaniques et physiques du matériau (constituant les léchettes à rénover doivent être évidemment prises en considération pour le choix des valeurs des paramètres précédents. C'est ainsi que l'accroissement de la hauteur radiale $(h'-h)$, obtenu par le fluotournage dépend essentiellement de l'espacement des galets G1 et G2 et de l'amplitude de leur avance A; bien entendu, l'espacement des galets G1 et G2 doit être choisi en fonction de la largeur du sommet, s, des léchettes usées, ainsi que de l'épaisseur des galets, G1 et G2, qui n'est d'ailleurs limitée que par l'écartement des léchettes voisines, par exemple 1b1 et 1b2; la vitesse d'avance radiale de l'outil de fluotournage doit être choisie la plus faible possible, pour éviter que les bords des galets ne soient déformés par la léchette en forme de coin; cette vitesse d'avance doit aussi être choisie en fonction de la dureté du matériau; elle peut être par exemple de l'ordre de 0,8 à 1 mm/minute pour un matériau de la léchette présentant une dureté inférieure ou égale à 350 HB, et seulement de 0,5 à 0,7 mm/minute pour un matériau de dureté supérieure à 350 HB.

La présente invention n'est pas limitée au mode d'exécution précédemment décrit. Elle englobe toutes les variantes de nature similaire qui puissent assez facilement être substituées les unes aux autres et à condition qu'elles n'étendent en aucune façon le champ de la protection de l'invention définie dans la revendication indépendante correspondante.

L'outil de fluotournage est susceptible d'être utilisé d'une manière différente de celle précédemment décrite, c'est-à-dire l'outil pourrait être monté fixe dans la direction axiale, alors que la pièce portant les léchettes serait montée de façon à pouvoir être déplacée dans cette direction. Les opérations de rectification au diamètre nominal, des léchettes fluotournées, ainsi que le pierrage de leurs flancs sont matières à option. Enfin, le procédé selon la présente invention est applicable à la rénovation des joints-labyrinthes usés, quel que soit leur type, comprenant par exemple des dents au lieu des léchettes annulaires, deux systèmes de dents imbriqués ... etc.

**Revendications**

1. Procédé pour rénover des joints-labyrinthes usés, en particulier sur des pièces de turbomachines, dont la hauteur radiale des léchettes annulaires du joint-labyrinthe, réduite par l'usure, doit être ramenée, à la valeur nécessaire pour rétablir l'étanchéité du joint-labyrinthe, caractérisé par le fait que la pièce dont les léchettes annulaires usées sont solidaires et sont concentriques à l'axe de révolution (A) de la pièce et espacées régulièrement dans la direction dudit axe (A), est montée en mandrin sur un tour, puis entraînée en rotation à une vitesse constante, appropriée, et que, pendant la rotation de la pièce, ses différentes léchettes annulaires sont successivement soumises à une opération de fluotournage, consistant à déplacer radialement, avec une vitesse d'avance et sur une distance radiale appropriées, un outil comprenant deux galets, qui sont disposés, avec un écartement maintenu constant et inférieure à la largeur minimale de la léchette usée, de façon à pincer ses deux flancs et à réduire leur écartement, de telle sorte que la matière de la léchette, qui est refoulée dans la direction axiale vient agrandir sa hauteur radiale jusqu'à une valeur au moins égale à sa valeur nominale.

2. Procédé selon la revendication 1, caractérisé en ce que l'outil est maintenu dans sa position d'avance radiale, maximale pendant une durée appropriée avant son déplacement radial de retrait.

3. Procédé selon l'une quelconque des revendications 1 ou 2, caractérisé en ce que, après les opérations de fluotournage, les léchettes annulaires sont rectifiées à leur diamètre nominal et, éventuellement, les défauts de leurs flancs sont éliminés, par exemple par pierrage.

4. Outil pour mettre en œuvre le procédé selon l'une quelconque des revendications 1 à 3, sur un tour parallèle, caractérisé en ce qu'il comporte deux galets (G1, G2) enfilés sur un axe (3) avec interposition d'une cale d'écartement (7), d'épaisseur adaptée à la largeur de la léchette à fluotourner, des moyens (6a, 8a, 8b, 9) pour immobiliser axialement les deux galets (G1, G2) et leur cale d'écartement (7) et un bras (10), par exemple coudé, pour fixer ledit axe (3) à un organe du tour déplaçable radialement et axialement, par exemple à un chariot du tour.

**Claims**

1. Process for renovating worn labyrinth seals, particularly on turbomachine parts, in which the radial height of the annular lips of the labyrinth seal, reduced by wear, has to be brought back to the value necessary for restoring the leaktightness of the labyrinth seal, characterized by the fact that the part to which the worn annular lips, which are concentric to the axis of revolution (A) of the part and are regularly spaced in the direction of said axis (A), are fastened is chucked in a lathe, then driven at an appropriate constant speed, and that during the rotation of the part its different annular lips are in succession subjected to a flow turning operation consisting in radially displacing, at an appropriate feed speed and over an appropriate radial distance, a tool comprising two rollers which are disposed, with a spacing kept constant and less than the minimum width of the worn lip, in such a manner as to pinch its two flanks and to reduce their spacing, so that the material of the lip, which is driven back in the axial direction, will increase its radial height to a value at least equal to its nominal value.

2. Process according to Claim 1, characterized in that the tool is held in its position of maximum radial feed for an appropriate time before its radial withdrawal displacement.

3. Process according to either of Claims 1 and 2, characterized in that after the flow turning operations the annular lips are ground to their nominal diameter and any defects in their flanks are eliminated, for example by honing.

4. Tool for applying the process according to any one of Claims 1 or 3, on a parallel lathe, characterized in that it comprises two rollers (G1, G2) mounted on a shaft (3) with the interposition of a spacer shim (7) whose thickness is adapted to the width of the lip to be flow turned, means (6a, 8a, 8b, 9) for axially securing the two rollers (G1, G2) and their spacer shim (7), and an arm (10), for example a bent arm, for fastening said shaft (3) to a radially and axially movable member of the lathe, for example a lathe carriage.

**Patentansprüche**

1. Verfahren zur Instandsetzung abgenutzter Labyrinthdichtungen, insbesondere an Teilen von Turbomaschinen, wobei die durch die Abnutzung verringerte radiale Höhe der ringförmigen Dichtrippen der Labyrinthdichtung wieder auf den für die Wiederherstellung der Dichtigkeit der Labyrinthdichtung erforderlichen Wert gebracht werden muss, dadurch gekennzeichnet, dass das Teil, mit dem die abgenutzten ringförmigen Dichtrippen fest verbunden sind und zu dessen Drehachse (A) sie konzentrisch und in regelmässigen Abständen in Richtung dieser Achse (A) angeordnet sind, in das Spannfutter einer Drehbank eingespannt und dann mit einer geeigneten konstanten Geschwindigkeit gedreht wird, und dass während der Drehbewegung des Teils seine verschiedenen ringförmigen Dichtrippen nacheinander einer Rolldrückbearbeitung unterzogen werden, die darin besteht, dass ein Werkzeug mit geeigneter Vortriebsgeschwindigkeit und über eine geeignete Vorschubdistanz in radialer Richtung bewegt wird, das zwei Walzrollen aufweist, die in einem Abstand angeordnet sind, der konstant gehalten und kleiner ist als die kleinste Breite der abgenutzten Dichtrippen, so dass sie die beiden Flanken dieser Dichtrippen einklemmen und ihren gegenseitigen Abstand verringern, derart dass die radiale Höhe der Dichtrippen durch das in axialer Richtung angestauchte Material der Dichtrippen auf einen Wert vergrössert wird, der zumindest so gross ist wie der Nennwert.

2. Verfahren nach Anspruch 1, dadurch gekennzeichnet, dass das Werkzeug während einer geeigneten Zeitdauer in seiner Position maximalen Vorschubs gehalten wird, bevor es in radialer Richtung zurückgezogen wird.

3. Verfahren nach einem der Ansprüche 1 oder 2, dadurch gekennzeichnet, dass die ringförmigen Dichtrippen nach der Rolldrückbearbeitung auf ihren Nenndurchmesser abgeschliffen und die Fehlerstellen an ihren Flanken beispielsweise durch Honen beseitigt werden.

4. Werkzeug zur Durchführung des Verfahrens nach einem der Ansprüche 1 bis 3 auf einer Leitspindeldrehbank, dadurch gekennzeichnet, dass zwei Walzrollen (G1, G2), die unter Zwischenfügung einer Abstandsscheibe (7), deren Dicke an die Breite der der Rolldrückbearbeitung zu unterziehenden Dichtrippen angepasst ist, auf einer Achse (3) aufgereiht sind, Mittel (6a, 8a, 8b, 9) zum axialen Festlegen der beiden Walzrollen (G1, G2) und ihrer Abstandsscheibe (7) und einen, beispielsweise gekröpften, Arm (10) zum Fixieren der Achse (3) an einem in radialer und axialer Richtung bewegbaren Organ, z.B. einem Schlitten der Drehbank.

FIG.: 1

FIG.: 2          FIG.: 3          FIG.: 4

EP 0 165 083 B1